# EUROPÄISCHE PATENTSCHRIFT

(11) **EP 0 524 908 B1**
(45) Veröffentlichungstag und Bekanntmachung des Hinweises auf die Patenterteilung: **31.03.1999**
(21) Anmeldenummer: 92810560.0
(22) Anmeldetag: 21.07.1992
(51) Int. Cl.: C05F 17/00, C05F 17/02, A01K 67/033

(54) **Herstelling von Kompost**
Compost production
Fabrication de compost

(30) Priorität: 22.07.1991 CH 2176/91
(43) Veröffentlichungstag der Anmeldung: 27.01.1993
(73) Patentinhaber: Bieri, Markus, Dr., 8803 Rüschlikon (CH)
(72) Erfinder: Bieri, Markus, Dr., 8803 Rüschlikon (CH)
(74) Vertreter: Arato, Laszlo

(56) Entgegenhaltungen:
- BE-A- 899 797
- DE-A- 4 000 916
- DATABASE WPIL Section Ch, Week 8835, Derwent Publications Ltd., London, GB; Class C04, AN 88-244531

## Beschreibung

Die Erfindung betrifft ein Verfahren und eine Vorrichtung für die Herstellung von Kompost für den biologischen Pflanzenschutz, gemäss den kennzeichnenden Merkmalen von Anspruch eins.

Zur Kompostierung organischer Abfälle sind die nachfolgenden Verfahren und Vorrichtungen bekannt.
In DE 40 00 916 A wird eine Trommel zum chargenweise Verrotten von organischem Material vorgeschlagen, die um ihre Längsachse von Hand oder motorisch drehbar ist und senkrecht zu ihrer Längsachse in mindestens zwei Kammern geteilt ist, die jeweils durch Öffnungen zu beschicken oder entleeren sind. Die Kammern werden wechselweise zum Ansammeln und zum anaeroben Kompostieren gebraucht.
HU 45 467 A schlägt die Verwendung von Kompostwürmern oder deren Kokons für die Aufbereitung von Klärschlamm in Beeten vor.
BE 899 797 A erklärt die Benützung von Kompostwürmern in einem ruhenden Lagerbehälter zur Beschleunigung der Zersetzung von organischem Material zum Humus.
In EP 0 091 495 ist die Kompostierung kommunaler Abfälle mit Einsatz von Regenwürmern in einen senkrechten, konditionierten und zwangsweise gerührten Silo beschrieben.

Zweck der vorliegenden Erfindung ist ein Verfahren und eine Vorrichtung zur Herstellung von Komposten für den biologischen Pflanzenschutz, um bodenbürtige Schadpilze von Kulturpflanzen und pflanzenschädigende Fadenwürmer (Nematoden) ohne die Verwendung chemischer Präparate zu unterdrücken, sowie Mittel zum Betreiben dieses Verfahrens, um schwer zerlegbare organische Materialien abzubauen.
Das Verfahren soll sich für die lokale und somit dezentrale Kompostierung biologisch abbaubarer Abfälle ohne Konditionierung eignen, damit diese so beschaffen sind, dass sie sich ohne Zwischenlagerung, praktisch am Ort des Anfalles, und ohne Zutaten in mindestens einer drehbaren, einfach bedienbaren Trommel effizient zu Wurmkompost verwandeln lassen. Die erforderliche Investition für die Herstellung der Vorrichtung und der Installation des Verfahrens soll, wie auch deren Betriebsaufwand, unwesentlich über den Kosten und dem Bedienungsaufwand eines Zwischenlagers liegen. Aus diesem Grunde soll die Bedienung der Anlage so problemlos wie die einer Haushaltswaschmaschine sein, so dass sie ohne Fachkenntnisse und ohne besondere Anstrengung vom jeweils vorhandenen Personal erfolgen kann. Die Erfindung soll die negativen Umwelteinflüssen, wie beispielsweise Geruchbelästigung durch Fehlrotten, die Entstehung von unangenehmen Sickersäften, sowie das Auftreten von Fruchtfliegen, die beim Zwischenlagern kaum zu vermeiden sind, verunmöglichen. Zu der Anlage soll die Möglichkeit des problemlosen Impfens mit speziellen Mikroorganismen und/oder Kompostwürmern vorgeschlagen werden und damit die Haltung von Würmern - wie Dendrobena veneta, Eisenia fetida, Eudrilus eugeniae, Perionyx excavatus und Pheretima hawayana - möglich sein, deren Stoffwechsel den Abbau von organischen Materialien erlaubt, und die biologisch zum Teil sehr schwer zerlegbar sind. Durch das Verfahren soll die Verarbeitung von festen, flüssigen oder schlammartigen Abfällen verschiedenster Art, zu einer erdtrockenen Substanz möglich sein. Die Qualität des Wurmkompostes soll als Humusdünger den Anforderungen der Wiederverwertung am Ort entsprechen, oder mangels Bedarf, nebst der Möglichkeit des zeitlich unbeschränkten Zwischenlagerns, als indifferentes Bodenmaterial, sich für den problemlosen Transport eignen, und zugleich die Minderung der Transportkosten gestatten.

Ein Vorteil der Erfindung ist, dass sie keine industrielle Mittel der Logistik, der Infrastruktur und der Betriebsführung bedarf. Wegen der kurzen Haltbarkeit organischer Substanzen ist nämlich die häufige Sammlung und der Transport der Abfälle in eine zentrale Kompostieranlage unabdingbar. Am augenfälligsten erscheint diese Notwendigkeit bei den Abfällen der Lebensmittelbetriebe, wie Restaurants, die ihre Speisereste wegen Geruchsbelästigung und Fehlrotten kaum lagern, und aus veterinärhygienischen Gründen immer weniger als Tierfutter verwerten, oder verwenden dürfen.

Erfindungsgemäss wird diese Aufgabe durch die Merkmale der unabhängigen Ansprüche 1, 2 und 5 gelöst; bevorzugte Ausführungsformen der Erfindung sind Gegenstand der abhängigen Ansprüche 3, 4 und 6.

Anhand der beiliegenden schematischen Zeichnung wird die Erfindung beispielsweise erläutert. Es zeigen:
- Fig. 1: eine für die chargenweise Durchführung des Verfahrens erforderliche Vorrichtung in der Betriebsphase der Beschickung,
- Fig. 2: die Grundstellung der Vorrichtung nach Fig.1 in der Betriebsphase der Kompostentnahme.

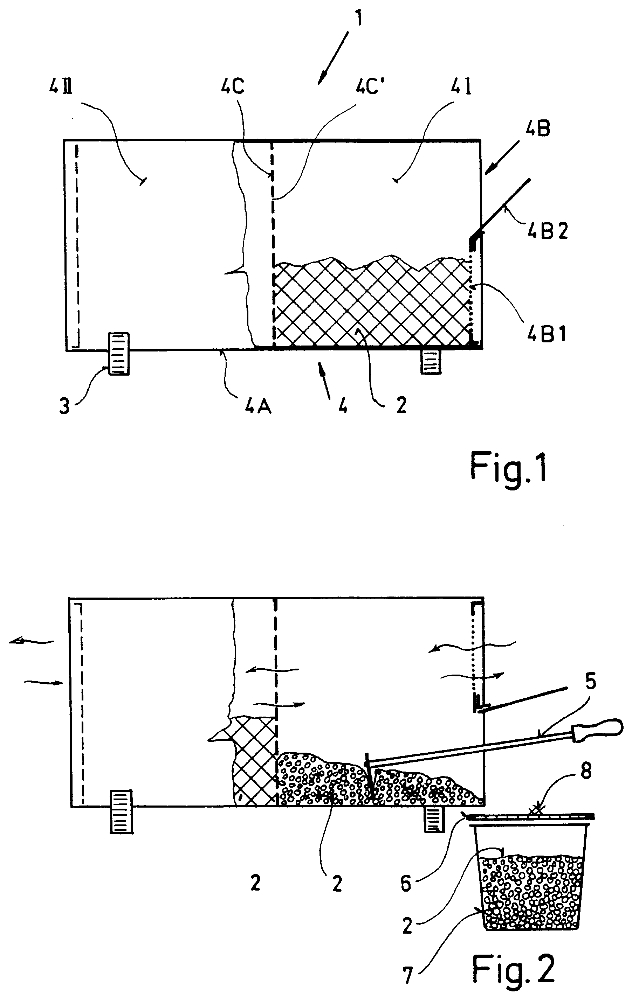

Die in den Figuren 1 und 2 gezeigten Vorrichtungen stellen als Ausführungsbeispiel eine Kleinanlage 1 für die Kompostierung der Abfälle 2 eines aus vier bis fünf Personen bestehenden Haushaltes mit einer auf Rollen 3 ruhenden, drehbaren walzenartigen Trommel 4 mit 200 Liter Inhalt dar. Diese waagrechte zylindrische Trommel 4 wird vorzugsweise aus chemisch - biologisch widerstandsfähigem Werkstoff, beispielsweise aus rostfreiem Stahl oder aus Polypropylen gefertigt, und besteht aus einem Trommelzylinder 4A, zwei Trommelböden 4B und einer den Trommelzylinder 4A abschnittsweise trennenden, gelochten Trennwand 4C. Durch diese gelochte Trennwand 4C wird die Trommel 4 auf zwei gleich grosse Kammern 4/I und 4/II so geteilt, dass die Ausbildung und Ausrüstung (4B1, 4B2,) der Kammern 4/I und 4/II im Bezug auf die Trennwand 4C völlig symmetrisch sind. Die gratlose Lochung der Trennwand 4C besteht vorzugsweise aus runden Löchern 4C' mit einem Durchmesser von 5 mm. Jeder Trommelboden 4B ist mit einem feinmaschigen Netzgewebe bespannten Lüftungsöffnung 4B1, und einer verriegelbaren Klapptüre 4B2 versehen und kann zusätzlich im Randbereich des Trommelbodens mit einem nichtgezeigten Handgriff ausgerüstet sein, dessen Achse vorzugsweise mit der Trommelachse parallel verläuft.
Für die Durchführung des Verfahrens wird beispielsweise die Trommelkammer 4/I mit Abfällen beschickt. Mit der ersten Beschickung erfolgt die mikrobielle Beimpfung und die Ansiedlung vom Kompostwürmern. Dies geschieht vorzugsweise so, dass die Mikroorganismen und die Kompostwürmer in inaktiver, lagerfächiger Form vom getrockneten Pellets und Kokons aufbewahrt und erst vor der Zugabe zum Abfall befeuchtet werden. Aus diesen Komponenten entsteht in kurzer Zeit die aktive Biomasse die Prozesse; die Flora der Mikroorganismen und die Population der Kompostwürmer. Zwecks Mischung und Durchlüftung des Trommelinhalts wird nach jeder Beschickung die Trommel 4 einige Male gedreht und in die in Fig.2 dargestellte, arretierbare Grundstellung gebracht. In der Grundstellung wird die obere Hälfte der Trommel 4 für die Belüftung frei, womit durch beide Lüftungsöffnungen 4B1 und durch die Löcher 4C1 die, in der Trennwand 4C die freie Luftzirkulation gewährleistet ist.

Die Nährstoffe aus der Abfallmenge von 50-60 Litern der Trommelkammern 4/I werden bei Zimmertemperaturen innert wenigen Tagen durch die Biomasse verzehrt. Häufen sich die frisch anfallenden Abfälle in der Trommelkammer 4/II, dann wenden sich die Kompostwürmer dem reicheren Nahrungsangebot zu und schlüpfen durch die Löcher 4C1 der Trennwand 4C hindurch in die Trommelkammer 4/II. Von den Kompostwürmern wird die für die Beimpfung erforderliche Menge der Mikroorganismen mitgeschleppt, so dass ein selbständiges Pendeln der Biomasse im Rhythmus des Nährstoffangebotes der Trommelkammern 4/I und 4/II entsteht. Die Zeit zum Exodus aus den kompostierten Trommelkammern dauert so lange, bis die frisch gefüllte Trommelkammer ganz voll ist. Dann wird die Trommel, wie vor der Beschickung, einige Male gedreht, in der Grundstellung gemäss Fig.2 angehalten, und der Kompost 2' nach Oeffnen der verriegelbaren Klapptüre 4B1 mit Hilfe eines Rechens 5 auf ein grobbmaschiges Sieb 6 gezogen.
Dort rieselt die Wurmerde 2'' als Siebfein in den Kübel 7. Am Sieb verbleiben als Rückstand 8 die biologisch nicht abbaubaren Teile. Die Entsorgung dieser Rückstände bleibt Sache der Müllabfuhr.

Die Vorrichtung für das kontinuierliche Verfahren eignet sich als mittlere- Klein- oder Kleinstanlage. Sie kann als ein oder als mehrstufige Anlage je nach den örtlichen Bedingungen und Ansprüchen konzipiert werden, indem sich mehrere Trommeln 4 kaskadenartig entsprechend der einzelnen Verfahrenstufen, reihen, beispielsweise zur Hygenisierung des Abfalles, Beimpfung des hygenisierten Materials, Zucht der Biomasse und Trocknung des Kompostes. Die Vorrichtung für das kontinuierliche Verfahren unterscheidet sich grundlegend von der Vorrichtung nach Fig.1 und 2, obwohl diese vorzugsweise auch aus einer einzigen waagrechten, auf Rollen 3 gelagerten, zylindrischen Trommel 4 besteht. Der Trommelzylinder 4A bildet mit den Trommelböden 4B eine einzige Trommelkammer 4/I. Die beiden Trommelböden weisen je eine zentrale runde Oeffnung auf, wovon die eine für die kontinuierliche Beschickung mit Abfall 2 und die andere für die kontinuierliche Entnahme des Kompost 2' dient. Für die Beschickung wird der Abfall 2 in den Aufgabetrichter gekippt. In der Mündung des Aufgabetrichters ist ein Zerkleinerer plaziert, der die abfallenden Abfälle zerkleinert und in die Trommel 4 fördert. Die Trommel 4 wird im Betrieb periodisch gedreht, damit der Trommelinhalt fortwährend gerührt wird. Ständig wird der Exhaustor betrieben, der parallel zu den Abfällen Luft durch den Aufgabetrichter in die Trommel 4 saugt. Durch die Rotation wird der Trommelinhalt immer wieder neu verteilt, so dass die anfallenden Abfälle für das Hinausdrängen der Wurmerde am anderen Ende der Trommel sorgen. In diesem Strom des Materials behauptet sich die Biomasse, in dem sie sich ständig im Bereich des reichen Nahrungsangebotes hält.

Die vorgeschlagene Art der Beimpfung gilt für das chargenweise und das kontinuierliche Verfahren gleichermassen. Die Vorteile dieser Art der Beimpfung sind vielfältig. Zunächst ist sie bedienungsfreundlich, weil sie keinen Kontakt mit Bedienungspersonen fordert. Da vermiphobe Personen Dank dieses Umstands sich nicht provoziert fühlen, ist mit breiter Akzeptanz der Bevölkerung zu rechnen. Da das Impfmaterial über längere Zeit - kühl aufbewart - lagerfähig ist, ist ein Nachimpfen zur Belebung und Erneuerung der Biomasse oder zum Neustarten des Prozesses nach einen Betriebsunterbruch, - beispielsweise wegen Nährstoffmangel in der Ferienzeit,- ohne Umtriebe und besondere Sorgfalt möglich. Aus all diesen Gründen werden die Pellets oder Pillen - die zwiebelschalenweise etsprechend der gewünschten Mischung der Mikroorganismen strukturiert sind - in rieselförmigem Zustand - etwa wie Waschpulver - in Büchsen gefüllt angeboten. Die Kokons werden mit Einbettungsmaterialien vermischt und päckchenweise - wie Teebeutel - portioniert und in eine solide Büchse verpackt für die Benützer angeboten. Eine besonders bevorzugte Ausführung dieser Mittel besteht aus in Beutel abgefüllten, gebrauchsfertig gemischten Pillen, Kokons und Einbettungsmaterialien. Für die Herstellung der Beutel eignen sich biologisch abbaubare Stoffe, beispielsweise in Vliessform. Als Einbettungsmaterialien werden lockere, leichte Substanzen, die biologisch abbaubar oder indifferent sind, vorgeschlagen, wie Papierstroh, Torf, Kieselgur oder expandierter Vermiculit - ein Verwitterungsprodukt von Hydroglimmern.

## Patentansprüche

1. Verfahren für die Herstellung von Kompost aus Haushaltsmüll und/oder aus Abfällen der Lebensmittelherstellung, Verteilung und Aufbereitung und/oder des Gartenbaus, der Zier- und der Nutzgärten, um bodenbürtige Schadpilze von Kulturpflanzen und pflanzenschädigenden Fadenwürmern (Nematoden) ohne die Verwendung chemischer Präparate zu unterdrücken, und/oder um schwer zerlegbare organische Materialien abzubauen, dadurch gekennzeichnet, dass die biologische Arbeit der Mikroorganismen mit Hilfe von Kompostwürmern in mindestens einer drehbaren Trommel (4) unterperiodischer Drehung erfolgt.

2. Drehbare Trommel (4) zur Durchführung des Verfahrens nach Anspruch 1, die senkrecht zu ihrer Längsachse mittels einer Trennwand (4C) in zwei Kammern geteilt ist, die jeweils durch Öffnungen zu beschicken oder zu entleeren sind, dadurch gekennzeichnet, dass die Trennwand (4C) gelocht ist (4C'), und die Öffnungen der Beschickung oder Entleerung in den Böden der Trommel mit Klapptüren (4B2) versehen sind.

3. Drehbare Trommel (4) nach Anspruch 2, dadurch gekennzeichnet, dass die Böden der Trommel mit mindestens einer Lüftungsöffnung (4B1) versehen sind, und dass die Lüftungsöffnungen (4B1) mit einem feinmaschigen Netzgewebe bespannt und so angeordnet sind, dass durch die beide Lüftungsöffnungen (4B1) und durch die Löcher (4C1) der Trennwand (4C) die freie Luftzirkulation, in der Grundstellung der Trommel (4), gemäss Fig.2 gewährleistet ist.

4. Drehbare Trommel (4) nach den Ansprüchen 2 und 3 dadurch gekennzeichnet, dass die Ladeöffnung der drehbaren Trommel (4) mit einem Zerkleinerer und mit einem Aufgabetrichter versehen ist.

5. Mittel dadurch gekennzeichnet, dass die Mikroorganismen artenweise, entsprechend der gewünschten Mischung, geschichtet, und die Schichten zwiebelschalenweise so angeordnet sind, dass sie eine Pille bilden.

6. Mittel nach Anspruch 5 dadurch gekennzeichnet, dass es mindestens teilweise aus Papierstroh, Torf, Kieselgur Vermiculit oder Schaumstoff besteht.

## Claims

1. A process to produce compost out of household wastes and/or wastes from food production processes, the distribution and the processing of horticultural products and/or of products from ornamental gardens or food crops, which suppresses soil borne-plant crop pathogens and nematode pests and/or which degrades resistant organic materials by the biological activity of micro-organisms and by earthworms in at least one cylindrical rotatable drum.

2. A rotatable drum (4) to produce the processes in accordance with claim 1, that is divided perpendicularly to its longitudinal axis into two chambers by a perforated partition wall (4C, 4C1). It can be loaded or emptied by openings (4B) provided with hinged doors (4B2).

3. A rotatable drum (4) in accordance with claim 2, with end walls equipped with at least one opening for aeration (4B1) and with openings for aeration which are covered with a fine-meshed sieve. The openings (4B1) are positioned in such a way that the air can freely circulate through the holes (4C1) of the partition wall (4C) when the drum (4) is in its basic position, fig. 2.

4. A rotatable drum (4) in accordance with claims 2 and 3 where the opening for loading the drum (4) is provided with a funnel having a shredder inside.

5. A formulation to pack the micro-organisms as single species in layers in pills built up by several shells like an onion to combine the micro-organisms accordance to needs.

6. A formulation in accordance with claim 5 consisting at least in part of dried paper pulp, peat, infusorial earth, vermiculite or a foamy material.

## Revendications

1. Procédé pour la production de compost à partir de déchets ménagers et/ou de déchets de l'industrie alimentaire, la distribution et l'élaboration en horticulture et/ou en jardins pour plantes ornementales ou alimentaires pour réprimer les maladies telluriques des cultures et des nématodes pathogènes sans recours à des préparations chimiques et/ou pour décomposer des matériaux organiques difficilement dégradables, caractérisé par le fait que l'activité de micro-organismes avec l'aide de vers à compost a lieu dans au moins un tambour rotatif (4).

2. Tambour rotatif (4) pour la réalisation du procédé selon la revendication 1, divisé perpendiculairement à son axe longitudinal en deux chambres avec une paroi perforée (4C, 4C1) pouvant être remplies ou vidées par des ouvertures (4B) prévues dans les parois terminales du tambour. Ces ouvertures sont pourvues de portes à clapets (4B2).

3. Tambour rotatif (4) d'après la revendication 2, caractérisé par le fait que les parois terminales du tambour sont pourvues d'ouverture d'aération (4B1) et que les ouvertures d'aération (4B1) sont pourvues d'un tissu à mailles fines et ainsi installées que la libre circulation de l'air soit assurée par les deux ouvertures d'aération (4B1) et les trous (4C1) dans la paroi de séparation (4C) en position de base du tambour (4) selon la figure 2.

4. Tambour rotatif (4) d'après les revendications 2 et 3 caractérisé par le fait que l'ouverture de chargement du tambour rotatif (4) est pourvue d'un broyeur et d'un entonnoir de remplissage.

5. Formulation pour emballer les micro-organismes en couches d'espèces pures dans une pilule formée de différentes couches, tel un oignon, pour combiner les micro-organismes selon le mélange désiré.

6. Formulation d'après la revendication 5 caractérisée par le fait qu'elle est constituée au moins en partie de pulpe à papier séchée, de terre de vermicullite ou de substance mousseuse.
